# EUROPÄISCHE PATENTSCHRIFT

(11) **EP 0 844 153 B1**
(45) Veröffentlichungstag und Bekanntmachung des Hinweises auf die Patenterteilung: **05.09.2001**
(21) Anmeldenummer: 97119241.4
(22) Anmeldetag: 04.11.1997
(51) Int. Cl.: B60R 22/46

(54) **Schlossstraffer**
Buckle retractor
Rétracteur de boucle

(30) Priorität: 21.11.1996 DE 29620297 U
(43) Veröffentlichungstag der Anmeldung: 27.05.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- EP-A- 0 186 880
- EP-A- 0 625 450
- DE-U- 9 404 272

## Beschreibung

Die Erfindung betrifft einen Schloßstraffer mit einem Linearantrieb, der über ein Zugglied mit einem Gurtschloß verbunden ist, und einem Umlenkteil, welches das Zugglied zwischen dessen mit dem Gurtschloß verbundenen Ende und dem mit dem Linearantrieb verbundenen Ende umlenkt, wobei das Umlenkteil sowohl einen Halteabschnitt für den Linearantrieb als auch einen Befestigungsabschnitt aufweist, an dem das Umlenkteil fahrzeugfest montiert werden kann.

Ein solcher Schloßstraffer dient dazu, kurz vor einem Unfall eines Fahrzeugs die sogenannte Gurtlose in einem Sicherheitsgurtsystem zu beseitigen, so daß der Sicherheitsgurt möglichst eng an einem angegurteten Fahrzeuginsassen anliegt, damit dieser frühzeitig an der Verzögerung des Fahrzeugs teilnehmen kann. Zur Beseitigung der Gurtlose wird bei einem Schloßstraffer das Gurtschloß von fahrzeugfesten Verankerungspunkten des Sicherheitsgurtes weg verlagert, beispielsweise zum Fahrzeugboden hin. Die Verlagerung des Gurtschlosses kann mit einem Linearantrieb erzielt werden, der im allgemeinen aus einem zylindrischen Rohr und einem in diesem translationsverschiebbaren Kolben besteht. Das Zylinderrohr ist mit einer Treibladung versehen, die nach von einer geeigneten Auslösesensorik hervorgerufener Zündung ein unter Druck stehendes Gas erzeugt, das den Kolben im Inneren des Zylinderrohres verschiebt. Diese Verschiebung wird mit dem Zugglied auf das Gurtschloß übertragen.

Die EP-A-0 186 880 zeigt einen Schloßstraffer nach dem Oberbegriff des Anspruchs 1, bei dem ein zwischen einem Gurtschloß und einem Linearantrieb angeordnetes Zugseil durch ein Umlenkteil aus einer in etwa senkrechten in eine in etwa waagerechte Lage umgelenkt wird. Das Umlenkteil ist ein massiver Block mit einem darin ausgebildeten Kanal für das Zugseil, wobei der Block an einem fahrzeugfesten Teil befestigbar ist. Ein Zylinder eines pyrotechnischen Linearantriebs kann so an dem Block befestigt werden, daß das offene Ende des Zylinders in den Kanal übergeht. Außerdem kann auch ein Gasgenerator über eine entsprechende Ausnehmung in diesem Block integriert werden.

Aus der DE 94 04 272 U1 ist ein Schloßstraffer bekannt, bei dem eine Umlenkung eines Zugseils von einem Gurtschloß zu einem Linearantrieb über eine Umlenkrolle erfolgt. Das die Umlenkrolle enthaltende chassisfeste Gestell wird einerseits an einem fahrzeugfesten Teil und andererseits am Linearantrieb festgeschraubt.

Durch die Erfindung wird ein Schloßstraffer geschaffen, der in besonders einfacher Weise am Fahrzeug montiert werden kann. Ferner zeichnet sich der erfindungsgemäße Schloßstraffer durch besonders niedrige Herstellungs- und Montagekosten aus. Gemäß der Erfindung ist vorgesehen, daß das Umlenkteil ein einstückig mit dem Halteabschnitt und dem Befestigungsabschnitt ausgebildetes Blechbiegeteil ist. So kann das Umlenkteil bei minimalen Herstellungskosten und hoher Festigkeit einstückig ausgebildet sein. Bei dem erfindungsgemäßen Schloßstraffer hat das Umlenkteil somit drei Funktionen: Es lenkt das Zugglied zwischen dessen mit dem Gurtschloß verbundenen Ende und dessen mit dem Linearantrieb verbundenen Ende um. Dies ist insbesondere vorteilhaft, da aus Platzgründen der Linearantrieb des Schloßstraffers im allgemeinen waagerecht angeordnet werden soll, also beispielsweise parallel zum Fahrzeugboden, während das Gurtschloß dem Benutzer in einer für die Handhabung günstigen Stellung angeboten werden soll, also im allgemeinen senkrecht nach oben stehend. Somit muß das Zugglied um annähernd 90° umgelenkt werden. Außer zum Umlenken des Zugglieds dient das Umlenkteil auch als Halteabschnitt für den Linearantrieb. Dieser braucht nicht separat am Fahrzeug befestigt zu werden. Schließlich dient das Umlenkteil auch direkt zur Befestigung des Schloßstraffers am Fahrzeug. Daher ergibt sich insgesamt ein Kräfteverlauf, der für eine optimale Umsetzung der Antriebsleistung des Linearantriebs in eine Straffbewegung des Gurtschlosses vorteilhaft ist. Sämtliche Reaktionskräfte während des Straffens, die insbesondere zwischen der Umlenkung des Zugglieds und dem Linearantrieb wirken, werden von ein und demselben Bauteil aufgenommen. Außerdem wird die resultierende Gesamtkraft, die ins Fahrzeug eingeleitet werden muß, von wiederum demselben Bauteil übertragen. Zusätzlich kann der erfindungsgemäße Schloßstraffer als vormontierte komplette Einheit geliefert werden, die nur noch im Fahrzeug montiert werden muß.

Die Erfindung wird nachfolgend unter Bezugnahme auf bevorzugte Ausführungsformen beschrieben, die in den beigefügten Zeichnungen dargestellt sind. In diesen zeigen:
- Figur 1 in einer schematischen perspektivischen Ansicht einen erfindungsgemäßen Schloßstraffer gemäß einer ersten Ausführungsform;
- Figur 2 in einer schematischen perspektivischen Ansicht einen erfindungsgemäßen Schloßstraffer gemäß einer zweiten Ausführungsform;
- Figur 3 in einer schematischen perspektivischen Ansicht einen erfindungsgemäßen Schloßstraffer gemäß einer dritten Ausführungsform;
- Figur 4 in einer schematischen perspektivischen Ansicht einen erfindungsgemäßen Schloßstraffer gemäß einer Variante der in Figur 3 dargestellten Ausführungsform;
- Figur 5 in einer schematischen perspektivischen Ansicht das Umlenkteil des in Figur 3 dargestellten Schloßstraffers;
- Figur 6 in einer schematischen perspektivischen Ansicht das Umlenkteil des in Figur 4 dargestellten Schloßstraffers;
- Figur 7 in einer schematischen perspektivischen Ansicht das Umlenkteil des in Figur 1 dargestellten Schloßstraffers;
- Figur 8 das Umlenkteil von Figur 7 in einer anderen schematischen perspektivischen Ansicht;
- Figur 9 eine Variante des in den Figuren 7 und 8 dargestellten Umlenkteils;
- Figur 10 in einer schematischen perspektivischen Ansicht das Umlenkteil des in Figur 2 dargestellten Schloßstraffers; und
- Figur 11 das Umlenkteil von Figur 10 in einer anderen schematischen Perspektivansicht.

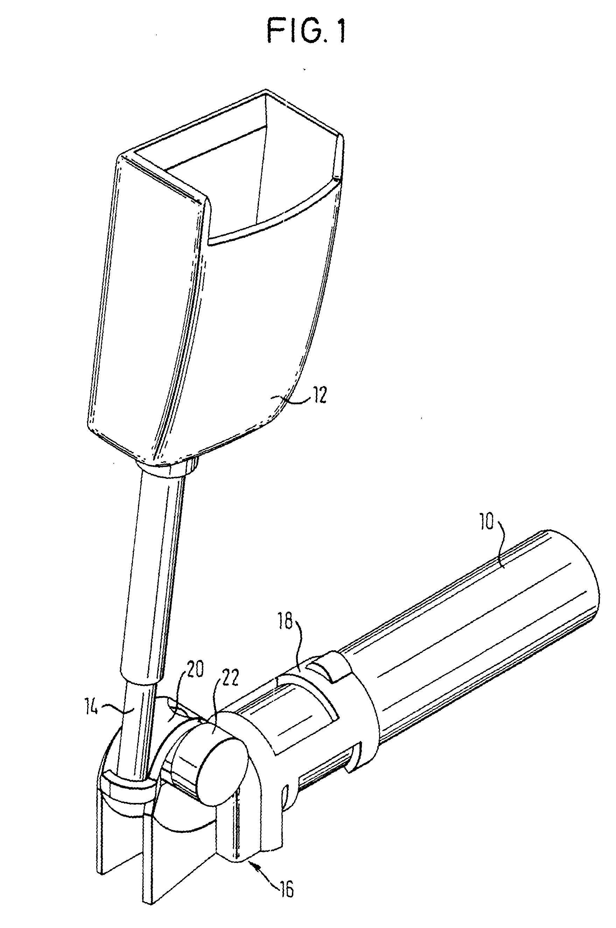

In Figur 1 ist in einer schematischen Perspektivansicht eine erste Ausführungsform eines erfindungsgemäßen Schloßstraffers dargestellt. Dieser besteht im wesentlichen aus einem Linearantrieb 10, einem Gurtschloß 12, einem Zugglied 14, dessen eines Ende mit dem Linearantrieb 10 und dessen anderes Ende mit dem Gurtschloß 12 verbunden ist, sowie einem Umlenkteil 16. Das Umlenkteil 16 lenkt das Zugglied 14, das vorzugsweise ein Zugseil aus Stahl ist, zwischen dessen beiden Enden um annähernd 90° um.

Das Umlenkteil 16 ist mit einem Halteabschnitt 18 für den Linearantrieb 10 sowie mit einem Befestigungsabschnitt 20 versehen. Dieser Befestigungsabschnitt ist mit einer Bohrung versehen, in der eine Befestigungsschraube 22 aufgenommen ist. Anstelle der Bohrung kann auch ein Schraubbolzen vorgesehen sein. Mit dem Schraubbolzen bzw. der Befestigungsschraube wird der Schloßstraffer fahrzeugfest montiert.

Bei der in Figur 1 dargestellten Ausführungsform eines erfindungsgemäßen Schloßstraffers ist der Befestigungsabschnitt 20 innerhalb des Winkels angeordnet, der zwischen den beiden Enden des Zugglieds 14 eingeschlossen ist. Unter "eingeschlossenem Winkel" wird hier der kleinere der beiden Winkel verstanden, die von dem dem Gurtschloß 12 zugeordneten Ende und dem dem Linearantrieb 10 zugeordneten Ende des Zugglieds 14 bestimmt werden. Der eingeschlossene Winkel beträgt bei der dargestellten Ausführungsform annähernd 90°.

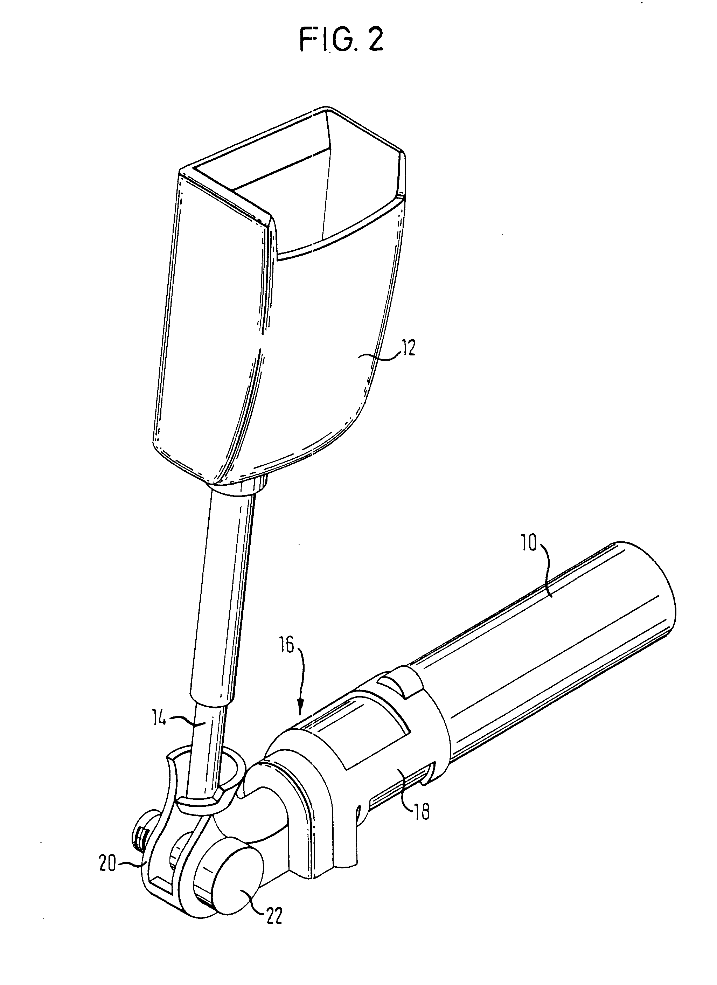

Die Längsachse der Bohrung in dem Befestigungsabschnitt 20 erstreckt sich bei der in Figur 1 dargestellten Ausführungsform senkrecht zu der Ebene, die von dem Zugglied 14 aufgespannt, also definiert ist. Dies ist auch bei der in Figur 2 dargestellten zweiten Ausführungsform eines erfindungsgemäßen Schloßstraffers der Fall. Im Gegensatz zur ersten Ausführungsform ist bei der zweiten Ausführungsform der Befestigungsabschnitt 20 jedoch außerhalb des Winkels angeordnet, der von den beiden Enden des Zugglieds 14 eingeschlossen ist. In Abhängigkeit von den jeweils vorhandenen Raumverhältnissen kann es sich als zweckmäßig erweisen, entweder den Befestigungsabschnitt innerhalb des von dem Zugglied 14 eingeschlossenen Winkels oder außerhalb von diesem anzuordnen. Die Anordnung der Längsachse der Bohrung des Befestigungsabschnittes senkrecht zu der von dem Zugglied 14 aufgespannten Ebene empfiehlt sich insbesondere dann, wenn der Schloßstraffer seitlich an beispielsweise einem Fahrzeugsitz angebracht werden soll.

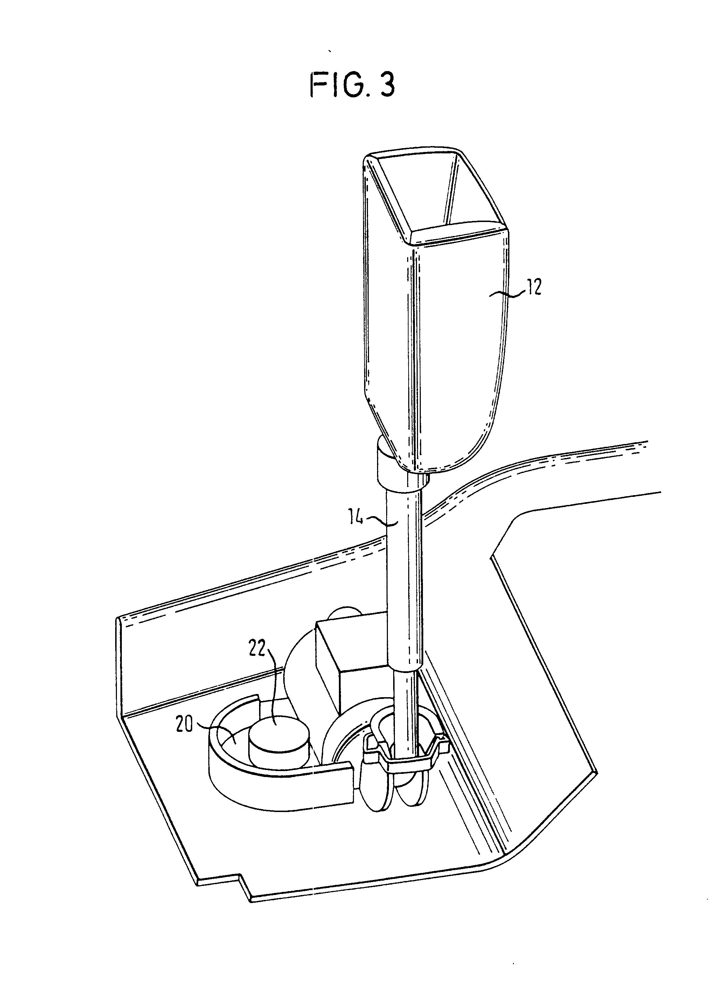

In Figur 3 ist eine dritte Ausführungsform eines erfindungsgemäßen Schloßstraffers dargestellt. Dieser Schloßstraffer ist dafür vorgesehen, auf eine Unterlage aufgeschraubt zu werden, beispielsweise auf den Fahrzeugboden. Dementsprechend erstreckt sich die Längsachse der in dem Befestigungsabschnitt 20 vorgesehenen Bohrung parallel zu der Ebene, die von dem Zugglied 14 aufgespannt ist.

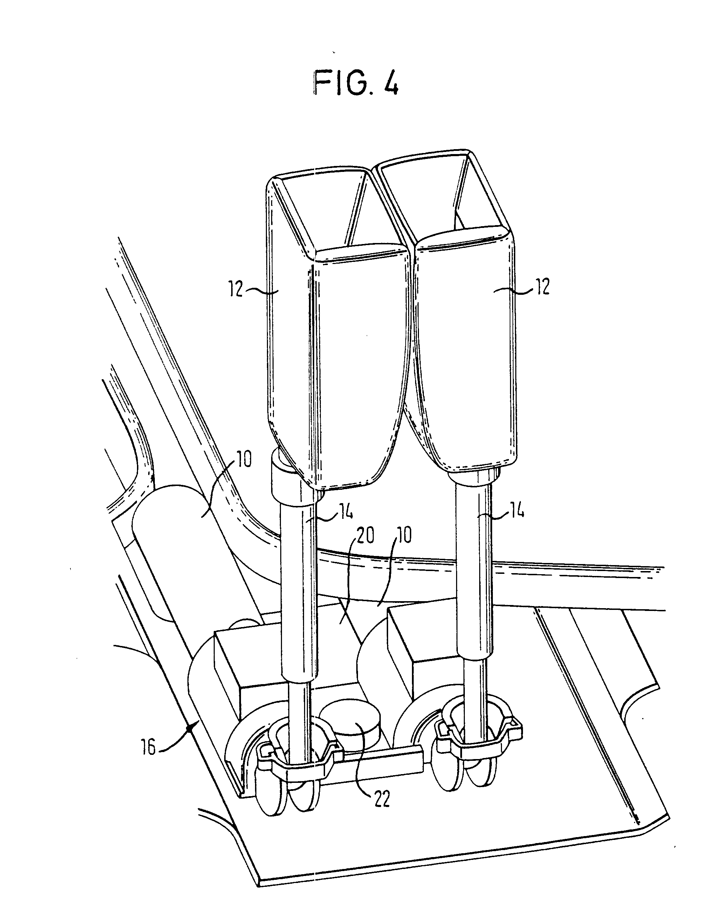

In Figur 4 ist eine Variante der in Figur 3 dargestellten dritten Ausführungsform eines erfindungsgemäßen Schloßstraffers dargestellt. Von der in Figur 3 dargestellten Ausführungsform unterscheidet sich die Variante von Figur 4 dadurch, daß zwei nebeneinanderliegende Schloßstraffer vorgesehen sind, beispielsweise für die beiden Gurtschlösser einer Rückbank eines Fahrzeugs. Der Befestigungsabschnitt 20 ist dabei zwischen den beiden Ebenen angeordnet, die von den beiden Zuggliedern 14 aufgespannt werden.

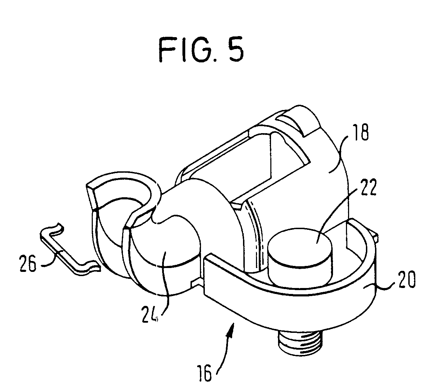

Nachfolgend werden die bei den in den Figuren 1 bis 4 dargestellten Schloßstraffern verwendeten Umlenkteile ausführlich beschrieben. In Figur 5 ist ein Umlenkteil 16 gezeigt, wie es bei der in Figur 3 dargestellten dritten Ausführungsform eines erfindungsgemäßen Schloßstraffers verwendet wird. Das Umlenkteil 16 ist ein einstückiges Blechbiegeteil, an dem der Halteabschnitt 18, der Befestigungsabschnitt 20 sowie ein Umlenkabschnitt 24 gebildet ist. Der Halteabschnitt 18 umgreift, wenn der Linearantrieb in diesen eingesetzt ist, den Außenumfang des Zylinderrohres des Linearantriebs 10 entlang einem Winkel in Umfangsrichtung, der größer als 180°, jedoch kleiner als 360° ist. Durch eine geeignete Auswahl der Abmessungen des Halteabschnitts 18 im Verhältnis zum Außendurchmesser des Zylinderrohres des Linearantriebs 10 ergibt sich ein guter Zusammenhalt zwischen dem Linearantrieb 10 und dem Umlenkteil 16. Gemäß einer nicht dargestellten Variante ist es auch möglich, daß der Halteabschnitt das Zylinderrohr nur mit einem Winkel von mehr als 90° umgreift. In diesem Fall wird das Zylinderrohr bei am Fahrzeug montiertem Schloßstraffer zwischen dem Halteabschnitt und dem Teil des Fahrzeugs eingespannt und somit festgelegt, an dem der Schloßstraffer mittels des Umlenkteils montiert ist. Der Halteabschnitt 18 des in Figur 5 dargestellten Umlenkteils 16 ist außerdem mit einer in dieser Figur nicht sichtbaren Anschlagfläche für das Zylinderrohr des Linearantriebs 10 versehen, so daß die bei Auslösung des Linearantriebs auftretenden Längskräfte in das Umlenkteil 16 eingeleitet werden können.

Der Umlenkabschnitt 24 ist nach Art eines Streifens ausgebildet, der um annähernd 90° gebogen ist. Die Außenränder des Umlenkabschnitts 24 sind auf der vom Krümmungsmittelpunkt abgewandten Seite verlängert, so daß eine rinnenartige Führung für das umzulenkende Zugglied 14 gebildet ist. An seinem dem Gurtschloß 12 zugewandten Ende ist der Umlenkabschnitt 24 trichterartig erweitert. Somit ist gewährleistet, daß das Zugglied auch bei aus der idealen Stellung ausgelenktem Gurtschloß 12 korrekt in den Umlenkabschnitt 24 hineingezogen wird.

Ein wichtiges Merkmal aller Umlenkteile 16, die bei den verschiedenen Ausführungsformen eines erfindungsgemäßen Schloßstraffers verwendet werden, besteht darin, daß das Umlenkteil 16 auf der Seite, die außerhalb des von den beiden Enden des Zugglieds 14 eingeschlossenen Ende liegt, geöffnet ist, so daß eine vormontierte Baugruppe, die aus dem Linearantrieb 10, dem Gurtschloß 12 und dem diese beiden Teile miteinander verbindenden Zugglied 14 besteht, problemlos an dem Umlenkteil 16 montiert werden kann. Es braucht nämlich nur der Linearantrieb 10 in den Halteabschnitt 18 eingesetzt und das Zugglied 14 in den Umlenkabschnitt 24 eingelegt werden. Abschließend muß lediglich das Zugglied 14 in der umgelenkten Stellung fixiert werden. Dies kann beispielsweise mit einem Halteclips 26 geschehen, der auf den Umlenkabschnitt 24 im Bereich des Übergangs zwischen den Seitenteilen des Umlenkabschnitts 24 und dem trichterförmigen Ende aufgeklippst wird.

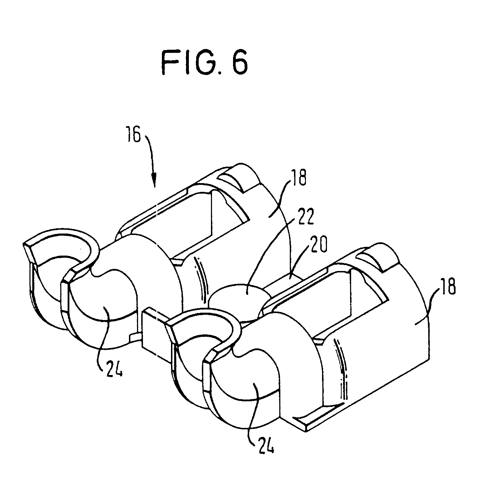

In Figur 6 ist das Umlenkteil dargestellt, das bei dem in Figur 4 dargestellten Schloßstraffer verwendet wird. Dieses Umlenkteil 16 entspricht weitestgehend dem in Figur 5 dargestellten; es sind allerdings zwei Halteabschnitte 18 und zwei Umlenkabschnitte 24 vorgesehen. Zwischen den beiden Halteabschnitten 18 erstreckt sich ein Befestigungsabschnitt 20.

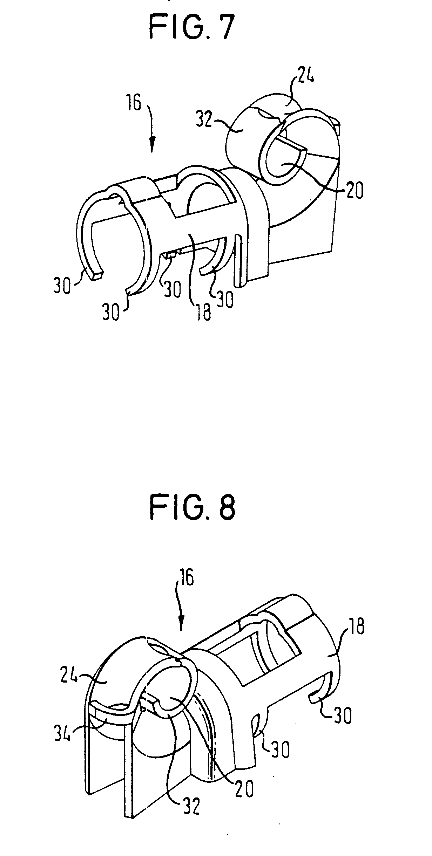

In den Figuren 7 und 8 ist das Umlenkteil des in Figur 1 dargestellten Schloßstraffers gezeigt. Auch dieses Umlenkteil 16 ist mit einem Halteabschnitt 18 für das Zylinderrohr des Linearantriebs 10, einem Umlenkabschnitt 24 für das Zugglied 14 und einem Befestigungsabschnitt 20 zur Befestigung des Schloßstraffers am Fahrzeug versehen. Im Gegensatz zu den in den Figuren 5 und 6 dargestellten Umlenkteilen ist der Halteabschnitt 18 des in den Figuren 7 und 8 dargestellten Umlenkteils 16 mit vier Haltelaschen 30 versehen, welche das Zylinderrohr des Linearantriebs 10 umgreifen.

Der Umlenkabschnitt 24 ist an seinem dem Gurtschloß 12 zugewandten Ende mit einer Verlängerung 32 versehen, die spiralförmig verläuft. Das Innerste der von der Verlängerung 32 gebildeten Spirale bildet den Befestigungsabschnitt 20.

In das Innere der Spirale kann beispielsweise eine Befestigungsschraube eingesetzt werden. Es wäre aber ebenso möglich, hier einen Befestigungsbolzen festzulegen.

Auch das in den Figuren 7 und 8 dargestellte Umlenkteil 16 ermöglicht eine Montage der oben beschriebenen vormontierten Baugruppe aus dem Zylinderrohr, dem Gurtschloß 12 und dem Zugglied 14, da zum einen der Umlenkabschnitt 24 zur Außenseite hin geöffnet ist und zum anderen die Haltelaschen 30 des Halteabschnitts 18 einander in einem solchen Abstand gegenüberliegen, daß das Zugglied 14 zwischen ihnen hindurchtreten kann. Wie insbesondere in Figur 8 zu sehen ist, ist an einem der Längsränder des Umlenkabschnittes 24 ein Haltestreifen 34 vorgesehen, der nach Einlegen der oben genannten vormontierten Baugruppe in das Umlenkteil und Umlenken des Zugglieds in die in Figur 8 dargestellte Stellung umgebogen werden kann, so daß das Zugglied 14 in der umgelenkten Stellung fixiert ist.

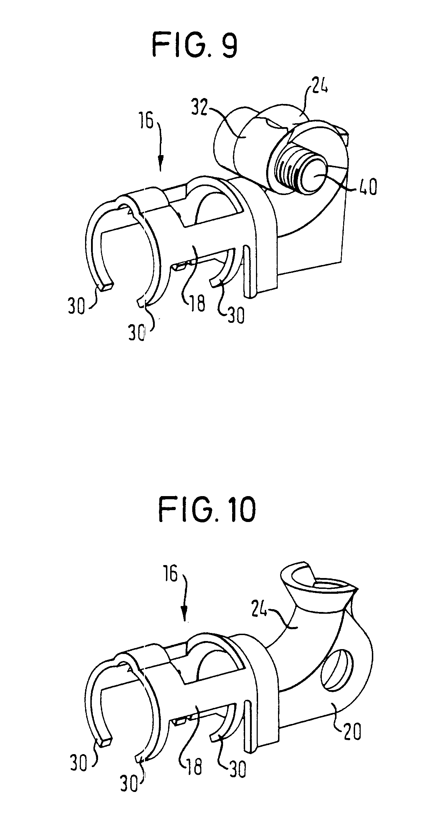

In Figur 9 ist eine Variante des in den Figuren 7 und 8 dargestellten Umlenkteils 16 gezeigt. Der Unterschied zu dem in den Figuren 7 und 8 dargestellten Umlenkteil besteht darin, daß bei dem Umlenkteil 16 von Figur 9 der Befestigungsabschnitt mit einem Schraubbolzen 40 versehen ist.

Da bei den in den Figuren 7 bis 9 dargestellten Umlenkteilen der Befestigungsabschnitt 20 innerhalb des von den beiden Enden des Zugglieds 14 eingeschlossenen Winkels liegt, wird der Befestigungsabschnitt 20 bei hohen Lasten, die von dem Gurtschloß 12 über das Umlenkteil 16 und den Befestigungsabschnitt 20 in das Fahrzeug eingeleitet werden, zum Umlenkabschnitt 24 hin beaufschlagt. Aufgrund der Eigenelastizität der Verlängerung 32 stützt sich ab einer gewissen Belastung die Außenseite des Befestigungsabschnittes 20 direkt an der dieser gegenüberliegenden Seite des Umlenkabschnittes 24 ab.

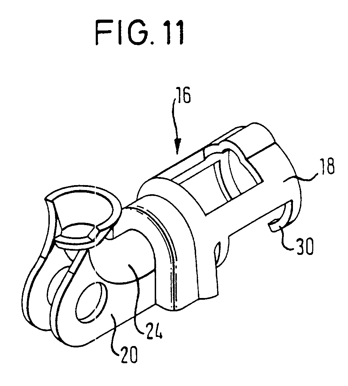

In den Figuren 10 und 11 ist das Umlenkteil 16 des in Figur 2 dargestellten Schloßstraffers gezeigt. Dieses Umlenkteil 16 unterscheidet sich von dem in den Figuren 7 bis 9 dargestellten Umlenkteil im wesentlichen dadurch, daß der Befestigungsabschnitt 20 außerhalb des Winkels liegt, der zwischen den beiden Enden des Zugglieds 14 eingeschlossen ist. Dabei ist der Befestigungsabschnitt 20 durch zwei Materialstreifen gebildet, die sich parallel zueinander ausgehend von Längsrändern des Umlenkabschnittes 24 erstrecken. In diesen beiden Materialstreifen ist die Bohrung gebildet, in die die Befestigungsschraube 22 eingesetzt werden kann.

## Patentansprüche

1. Schloßstraffer mit einem Linearantrieb (10), der über ein Zugglied (14) mit einem Gurtschloß (12) verbunden ist, und einem Umlenkteil (16), welches das Zugglied (14) zwischen dessen mit dem Gurtschloß (12) verbundenen Ende und dem mit dem Linearantrieb (10) verbundenen Ende umlenkt, wobei das Umlenkteil (16) sowohl einen Halteabschnitt (18) für den Linearantrieb (10) als auch einen Befestigungsabschnitt (20) aufweist, an dem das Umlenkteil (16) fahrzeugfest montiert werden kann, **dadurch gekennzeichnet**, daß das Umlenkteil (16) ein einstückig mit dem Halteabschnitt (18) und dem Befestigungsabschnitt (20) ausgebildetes Blechbiegeteil ist.

2. Schloßstraffer nach Anspruch 1, **dadurch gekennzeichnet**, daß der Befestigungsabschnitt (20) einen Schraubbolzen (40) aufweist.

3. Schloßstraffer nach Anspruch 1, **dadurch gekennzeichnet**, daß der Befestigungsabschnitt (20) eine Bohrung für eine Befestigungsschraube (22) aufweist.

4. Schloßstraffer nach Anspruch 2 oder Anspruch 3, **dadurch gekennzeichnet**, daß sich die Mittelachse des Schraubbolzens (40) bzw. der Bohrung parallel zu einer Ebene erstreckt, die von dem Zugglied (14) aufgespannt ist.

5. Schloßstraffer nach Anspruch 2 oder Anspruch 3, **dadurch gekennzeichnet**, daß sich die Mittelachse des Schraubbolzens (40) bzw. der Bohrung senkrecht zu einer Ebene erstreckt, die von dem Zugglied (14) aufgespannt ist.

6. Schloßstraffer nach einem der Ansprüche 1 bis 5, **dadurch gekennzeichnet**, daß der Befestigungsabschnitt (20) außerhalb des zwischen den beiden Enden des Zugglieds (14) eingeschlossenen Winkels angeordnet ist.

7. Schloßstraffer nach Anspruch 6, **dadurch gekennzeichnet**, daß das Umlenkteil (16) einen länglichen, sich über einen Winkelbereich von etwa 90° erstreckenden Umlenkabschnitt (24) aufweist und der Befestigungsabschnitt (20) durch zwei Materialstreifen gebildet ist, die sich parallel zueinander ausgehend von Längsrändern des Umlenkabschnittes (24) erstrecken.

8. Schloßstraffer nach einem der Ansprüche 1 bis 5, **dadurch gekennzeichnet**, daß der Befestigungsabschnitt (20) innerhalb des zwischen den beiden Enden des Zugglieds (14) eingeschlossenen Winkels angeordnet ist.

9. Schloßstraffer nach Anspruch 8, **dadurch gekennzeichnet**, daß das Umlenkteil (16) einen länglichen, sich über einen Winkelbereich von etwa 90° erstreckenden Umlenkabschnitt (24) aufweist und daß der Befestigungsabschnitt (20) durch eine Verlängerung (32) des Umlenkabschnittes (24) an dessen dem Gurtschloß (12) zugewandten Ende gebildet ist.

10. Schloßstraffer nach Anspruch 9, **dadurch gekennzeichnet**, daß die Verlängerung (32) des Umlenkabschnittes (24) spiralförmig ausgebildet ist und der Befestigungsabschnitt (20) durch die innerste Windung der spiralförmigen Verlängerung (32) gebildet ist.

11. Schloßstraffer nach einem der Ansprüche 7 bis 10, **dadurch gekennzeichnet**, daß der Umlenkabschnitt (24) entlang dem Zugglied (14) auf der Seite, die außerhalb des von den beiden Enden des Zugglieds (14) eingeschlossenen Winkels liegt, geöffnet ist.

12. Schloßstraffer nach einem der vorhergehenden Ansprüche, **dadurch gekennzeichnet**, daß der Linearantrieb (10) ein Zylinderrohr und einen in diesem translationsverschiebbaren Kolben aufweist und daß der Halteabschnitt (18) das Zylinderrohr entlang einem Winkel von weniger als 360° in Umfangsrichtung umgreift.

13. Schloßstraffer nach Anspruch 12, **dadurch gekennzeichnet**, daß der Halteabschnitt (18) das Zylinderrohr entlang einem Winkel von mehr als 90° in Umfangsrichtung umgreift und das Zylinderrohr bei fahrzeugfest montiertem Schloßstraffer zwischen dem Halteabschnitt (18) und einem fahrzeugfesten Teil festgelegt ist.

14. Schloßstraffer nach einem der Ansprüche 12 und 13, **dadurch gekennzeichnet**, daß der Halteabschnitt (18) das Zylinderrohr entlang einem Winkel von mehr als 180° in Umfangsrichtung umgreift.

15. Schloßstraffer nach einem der Ansprüche 12 bis 14, **dadurch gekennzeichnet**, daß der Halteabschnitt (18) das Zylinderrohr mittels mehrerer Haltelaschen (30) umgreift.

16. Schloßstraffer nach Anspruch 15, **dadurch gekennzeichnet**, daß die freien Enden der Haltelaschen (30) einander in einem Abstand gegenüberliegen, der mindestens gleich dem Durchmesser des Zugglieds (14) ist.

17. Schloßstraffer nach einem der vorhergehenden Ansprüche, **dadurch gekennzeichnet**, daß das Umlenkteil vergütet ist.

18. Schloßstraffer nach einem der vorhergehenden Ansprüche, **dadurch gekennzeichnet**, daß an einem Längsrand des Umlenkabschnitts (24) ein Haltestreifen (34) vorgesehen ist, die so über den Umlenkabschnitt (24) gebogen ist, daß zusammen mit diesem eine an den Querschnitt des Zugglieds (14) angepaßte Führung gebildet ist.

19. Schloßstraffer nach einem der vorhergehenden Ansprüche, **dadurch gekennzeichnet**, daß das Zugglied (14) ein Zugseil ist.

## Claims

1. A buckle tensioner comprising a linear drive (10) which is connected with a belt buckle (12) via a traction member (14), and a deflection member (16) which deflects the traction member (14) between its end connected with the belt buckle (12) and the end connected with the linear drive (10), the deflection member (16) possessing both a holding section (18) for the linear drive (10) and also an attachment section (20) at which the deflection member (16) can be mounted vehicle-fixed, **characterized in that** the deflection member (16) is a bent sheet metal part formed in one piece with the holding section (18) and the attachment section (20).

2. The buckle tensioner as claimed in claim 1, **characterized in that** the attachment section (20) possesses a screw bolt (40).

3. The buckle tensioner as claimed in claim 1, **characterized in that** the attachment section (20) has a hole for an attachment screw (22).

4. The buckle tensioner as claimed in claim 2 or claim 3, **characterized in that** the center axis of the screw bolt (40) and of the hole, respectively, extends parallel to a plane which is defined by the traction member (14).

5. The buckle tensioner as claimed in claim 2 or claim 3, **characterized in that** the center axis of the screw bolt (40) and of the hole, respectively, extends perpendicularly to a plane which is defined by the traction member (14).

6. The buckle tensioner as claimed in any of the claims 1 through 5, **characterized in that** the attachment section (20) is arranged outside the angle included between the two ends of the traction member (14).

7. The buckle tensioner as claimed in claim 6, **characterized in that** the deflection member (16) possesses an elongated deflection section (24) extending across an angular range of approximately 90°, and the attachment section (20) is constituted by two strips of material, which extend in parallelism to one another starting from the longitudinal edges of the deflection section (24).

8. The buckle tensioner as claimed in any of the claims 1 through 5, **characterized in that** the attachment section (20) is arranged within the angle included between the two ends of the traction member (14).

9. The buckle tensioner as claimed in claim 8, **characterized in that** the deflection member (16) possesses an elongated deflection section (24) extending across an angular range of approximately 90°, and in that the attachment section (20) is constituted by an extension (32) of the deflection section (24) at the end thereof facing the belt buckle (12).

10. The buckle tensioner as claimed in claim 9, **characterized in that** the extension (32) of the deflection section (24) is spiral in shape and the attachment section (20) is constituted by the innermost turn of the spiral extension (32).

11. The buckle tensioner as claimed in any of the claims 7 through 10, **characterized in that** along the traction member (14) and on the side outside the angle included by the two ends of the traction member (14), the deflection section (24) is open.

12. The buckle tensioner as claimed in any of the preceding claims, **characterized in that** the linear drive (10) possesses a cylinder tube and a piston adapted to move in translation therein, and in that the holding section (18) encompasses the cylinder tube in the circumferential direction along an angle of less than 360°.

13. The buckle tensioner as claimed in claim 12, **characterized in that** the holding section (18) encompasses the cylinder tube in the circumferential direction along an angle of more than 90°, and that, when the buckle tensioner is mounted vehicle-fixed, the cylinder tube is held in place between the holding section (18) and a vehicle-fixed part.

14. The buckle tensioner as claimed in any of the claims 12 and 13, **characterized in that** the holding section (18) encompasses the cylinder tube in the circumferential direction along an angle of more than 180°.

15. The buckle tensioner as claimed in any of the claims 12 through 14, **characterized in that** the holding section (18) encompasses the cylinder tube by means of a plurality of holding lugs (30).

16. The buckle tensioner as claimed in claim 15, **characterized in that** the free ends of the holding lugs (30) lie opposite each other by a distance which is at least equal to the diameter of the traction member (14).

17. The buckle tensioner as claimed in any of the preceding claims, **characterized in that** the deflection member is quenched and tempered.

18. The buckle tensioner as claimed in any of the preceding claims, **characterized in that** on one longitudinal edge of the deflection section (24) a holding strip (34) is provided which is bent over the deflection section (24) such that together with same a guide adapted to the cross-section of the traction member (14) is formed.

19. The buckle tensioner as claimed in any of the preceding claims, **characterized in that** the traction member (14) is a traction cable.

## Revendications

1. Tendeur d'attache comprenant un moyen d'entraînement linéaire (10), relié par un organe de traction (14) à une serrure de ceinture (12), et une pièce de déviation (16) qui dévie l'organe de traction (14) entre son extrémité reliée à la serrure de ceinture (12) et l'extrémité reliée au moyen d'entraînement linéaire (10), la pièce de déviation (16) comportant aussi bien une portion de retenue (18) pour le moyen d'entraînement linéaire (10) qu'une portion de fixation (20), au niveau de laquelle la pièce de déviation (16) peut être montée de manière solidaire au véhicule, **caractérisé en ce que** la pièce de déviation (16) est une pièce de tôle pliée (18) réalisée d'un seul tenant avec la portion de retenue (18) et la portion de fixation (20).

2. Tendeur d'attache selon la revendication 1, **caractérisé en ce que** la portion de fixation (20) comporte un boulon fileté (40).

3. Tendeur d'attache selon la revendication 1, **caractérisé en ce que** la portion de fixation (20) comporte un trou pour une vis de fixation (22).

4. Tendeur d'attache selon la revendication 2 ou la revendication 3, **caractérisé en ce que** l'axe médian du boulon fileté (40) ou du trou s'étend parallèlement à un plan défini par l'organe de traction (14).

5. Tendeur d'attache selon la revendication 2 ou la revendication 3, **caractérisé en ce que** l'axe médian du boulon fileté (40) ou du trou s'étend perpendiculairement à un plan défini par l'organe de traction (14).

6. Tendeur d'attache selon l'une des revendications 1 à 5, **caractérisé en ce que** la portion de fixation (20) est disposée à l'extérieur de l'angle compris entre les deux extrémités de l'organe de traction (14).

7. Tendeur d'attache selon la revendication 6, **caractérisé en ce que** la pièce de déviation (16) comporte une portion de déviation allongée (24) qui s'étend sur une zone angulaire d'environ 90°, et la portion de fixation (20) est formée par deux bandes de matière qui s'étendent parallèlement l'une à l'autre à partir des bords longitudinaux de la portion de déviation (24).

8. Tendeur d'attache selon l'une des revendications 1 à 5, **caractérisé en ce que** la portion de fixation (20) est disposée à l'intérieur de l'angle compris entre les deux extrémités de l'organe de traction (14).

9. Tendeur d'attache selon la revendication 8, **caractérisé en ce que** la pièce de déviation (16) comporte une portion de déviation allongée (24) qui s'étend sur une zone angulaire d'environ 90°, et en ce que la portion de fixation (20) est formée par un prolongement (32) de la portion de déviation (24) au niveau de l'extrémité de cette dernière tournée vers la serrure de ceinture (12).

10. Tendeur d'attache selon la revendication 9, **caractérisé en ce que** le prolongement (32) de la portion de déviation (24) est de forme spiralée, et la portion de fixation (20) est formée par la spire la plus intérieure du prolongement spiralé (32).

11. Tendeur d'attache selon l'une des revendications 7 à 10, **caractérisé en ce que** la portion de déviation (24) est ouverte le long de l'organe de traction (14) sur le côté situé à l'extérieur de l'angle défini par les deux extrémités de l'organe de traction (14).

12. Tendeur d'attache selon l'une des revendications précédentes, **caractérisé en ce que** le moyen d'entraînement linéaire (10) comporte un tube cylindrique et un piston mobile en translation dans celui-ci, et en ce que la portion de retenue (18) entoure le tube cylindrique selon un angle inférieur à 360° dans le sens circonférentiel.

13. Tendeur d'attache selon la revendication 12, **caractérisé en ce que** la portion de-retenue (18) entoure le tube cylindrique selon un angle supérieur à 90° dans le sens circonférentiel, et le tube cylindrique est immobilisé entre la portion de retenue (18) et une pièce solidaire du véhicule lorsque le tendeur d'attache est solidarisé au véhicule.

14. Tendeur d'attache selon l'une des revendications 12 à 13, **caractérisé en ce que** la portion de retenue (18) entoure le tube cylindrique dans le sens circonférentiel selon un angle supérieur à 180°.

15. Tendeur d'attache selon l'une des revendications 12 à 14, **caractérisé en ce que** la portion de retenue (18) entoure le tube cylindrique au moyen de plusieurs pattes de retenue (30).

16. Tendeur d'attache selon la revendication 15, **caractérisé en ce que** les extrémités libres des pattes de retenue (30) se font face mutuellement à une distance au moins égale au diamètre de l'organe de traction (14).

17. Tendeur d'attache selon l'une des revendications précédentes, **caractérisé en ce que** la pièce de déviation est traitée par trempe et revenu.

18. Tendeur d'attache selon l'une des revendications précédentes, **caractérisé en ce que** sur l'un des bords longitudinaux de la portion de déviation (24) est prévue une bande de retenue (34) qui est pliée au-dessus de la portion de déviation (24) de façon à former avec celle-ci un guide adapté à la section transversale de l'organe de traction (14).

19. Tendeur d'attache selon l'une des revendications précédentes, **caractérisé en ce que** l'organe de traction (14) est un câble de traction.
